# EUROPEAN PATENT SPECIFICATION

(11) **EP 2 798 295 B1**
(45) Date of publication and mention of the grant of the patent: **29.05.2019**
(21) Application number: 12826533.7
(22) Date of filing: 28.12.2012
(51) Int. Cl.: F27B 3/08, F27B 3/18, F27B 3/28, F27D 3/00, C21C 5/52

(54) **DEVICE AND METHOD TO CONTROL THE CHARGE IN ELECTRIC ARC FURNACES**
VORRICHTUNG UND VERFAHREN ZUR STEUERUNG DER LADUNG IN ELEKTROLICHTBOGENÖFEN
DISPOSITIF ET PROCÉDÉ POUR LA COMMANDE DE LA CHARGE DANS DES FOURS À ARC ÉLECTRIQUE

(30) Priority: 29.12.2011 IT UD20110216
(43) Date of publication of application: 05.11.2014
(73) Proprietor: Danieli Automation SPA, 33042 Buttrio (IT)
(72) Inventor: DELLA VEDOVA, Ferruccio, I-33050 Pozzuolo del Friuli (IT); OMETTO, Marco, I-33037 Pasian di Prato (IT)
(74) Representative: Petraz, Gilberto Luigi
(86) International application number: PCT/IB2012/002806
(87) International publication number: WO 2013/098636

(56) References cited:
- WO-A1-00/50648
- WO-A1-03/095685
- CH-A5- 690 109
- US-A- 6 004 504
- MANENTI A A: "FROM BLAST FURNACE TO EAF: THE TECHNOLOGY FOR THE CONVERSION FROM INTEGRATED PRODUCER TO HIGH-QUALITY ELECTRIC MINIMILL", IRON & STEEL TECHNOLOGY, AIST, WARRENDALE, PA, US, vol. 1, no. 7, 1 July 2004 (2004-07-01), pages 122-128, XP001199272, ISSN: 1547-0423

## Description

### FIELD OF THE INVENTION

The present invention concerns a device and the corresponding method to control the metal charge introduced into an electric arc furnace.

The metal charge according to the present invention mainly consists of undifferentiated scrap.

The invention advantageously concerns the introduction of the charge into the electric furnace through a specific opening made in the furnace, using transport means such as vibrating belts or conveyors.

### BACKGROUND OF THE INVENTION

It is known that the method for introducing the metal charge into an electric arc furnace, after tapping and in relation to any possible liquid heel remaining in the furnace, provides an advantageous progression that is widely adopted by those operating in this field.

For example, slabs of cast iron are introduced first, then low-value scrap mixed with other types of scrap, then higher value scrap, and finally another load of cast iron slabs.

The types of materials introduced depend on the type of steel to be obtained. It is also known that, in the case of continuous scrap conveyors, these cooperate with a specific hole in the roof or upper panel of the furnace

It is also known that the hole can then be closed or kept open, and that the fumes exiting from the furnace can be made to flow above and/or between the scrap, in a stand-by or transport step, in order to purify the fumes and at the same time to heat the scrap.

When the scrap is transported by conveyor belts or vibrating conveyors, these normally extend from the electric arc furnace at least as far as a warehouse, normally two, where piles of scrap are disposed, different in type and/or size.

Normally, two cranes per warehouse serve a continuous transporter to load the scrap in the desired sequence and quantities.

It is known that, in the case of continuous transporters, the charges deposited on the transporter must not exceed a certain bulk and must not leave interspaces free between one charge and the other.

The bulk is characteristic of the loading hole or mouth in the furnace.

The continuity of the charge is characteristic of the energy saving and loading time.

It is also known that the cranes pick up the scrap normally with magnets which can lift up to 5 tonnes and more of scrap at a time.

In relation to the solutions for loading electric arc furnaces known in the state of the art, one purpose of the present invention is to control the volume passing on the continuous conveyor.

It is also a purpose to control the bulk of the material passing on the continuous conveyor.

It is also a connected purpose to control the continuity of the charge in transit.

It is also a connected purpose to recreate continuity of the charge on the continuous conveyor.

It is also a connected purpose to control the presence of the slabs of cast iron at start and end.

It is a derived purpose to be able to integrate the charge with dedicated material.

Document US-A-6.004.504 describes a continuous loading method for an electric arc furnace in which there is an optical system to detect the profile of the charge. US'504 is intended to improve the control of the speed and quantity of charge fed to the furnace, in relation to optimizing the level and temperature of the liquid bath, but does not concern the control and optimization of the occupation of the surface of the conveyor.

WO-A-0050648 concerns a system, commanded by a camera, to crush compressible charge material so that it can pass through a dynamic seal. However, this document does not deal with the problem of optimizing the distribution of the metal charge on the conveyor either.

In particular, WO-A-0050648 comprises a charging cart moveable along the length of a charge conveyor. The charging cart can be positioned adjacent the end of the scrap bed so as to direct the loading of charge material onto the charge conveyor, so that the scrap bed on the charge conveyor is maintained at a consistent height or depth.

### SUMMARY OF THE INVENTION

The main purposes and advantages described above are obtained by a device and method according to the independent claims.

The dependent claims describe other purposes and advantages.

According to the invention, a system to detect the point-by-point profile of the metal charge is provided in association with a continuous conveyor.

According to a supplementary variant the system to detect the profile also detects the density of the metal charge in transit.

The point-by-point profile can be detected, in a first solution, with a brushing device or laser brush. In another solution, it is detected by an X-ray detection system.

The laser brush is able to draw the profile of the metal charge and therefore, in practice, indicates a specific volume occupied, and any possible insufficiencies present there. The X-ray detection identifies a specific area in transit and the density of the material in transit.

It is quite obvious that the X-ray detection not only allows to detect segments of the continuous conveyor where the metal charge is not present, or is present in limited quantities, but also allows to evaluate or control the weight of the charge thanks to the detection of the density of the area detected.

In association with the X-ray detection a system may be provided to control the maximum height that the charge of scrap can have inside the continuous conveyor.

As we said, the continuous conveyor can be a belt, or vibrating type. The continuous conveyor can also include pre-heating of the scrap or not, using the hot fumes exiting from the electric arc furnace.

If the detection system detects an insufficiency or discontinuity in the charge, it activates a command that drives a suitable container that selectively loads an additional charge onto the conveyor, in the desired position.

In a preferential solution, two or more containers are advantageously distributed, distanced from each other, on the length of the conveyor.

The additional charge can have a fixed quantity or a quantity related to the insufficiency detected by the control system.

For example, the additional charge can be correlated either by using partial scrap containers, or containers associated with weighing means.

The containers can be replenished either by gantries or, according to a variant, with a specialized system of belts, or cranes, which load the additional charge into the auxiliary containers.

For example, with the specialized system of belts it is possible to load into the containers scrap with a particular maximum shape and/or composition.

According to another variant, two detection systems are provided, one coarser, located upstream, and one finer, located downstream.

It is thus possible to provide, if necessary, a first coarse addition of metal charge downstream of the first detection system and, if necessary, a subsequent fine and point-by-point addition downstream of the second detection system.

According to a variant, the coarse and/or fine and point-by-point addition can also be made at a certain distance from the point of detection, since the advance of the material is controlled by the system and therefore the insufficiency remains known along the whole segment through which it passes.

With the system according to the invention it is also possible to control whether the charge of cast iron slabs is present in the head and tail zone of the charge, since the X-ray detection system also allows to identify this condition.

### DESCRIPTION OF THE DRAWINGS

These and other characteristics of the present invention will become apparent from the following description of one form of embodiment, given as a non-restrictive example with reference to the attached drawings wherein:
- fig. 1 shows schematically a possible form of embodiment of a device to control the charge in an electric arc furnace according to the invention;
- fig. 2 shows schematically the control and command system applied to the control device in fig. 1;
- fig. 3 shows a schematization of an X-ray control system;
- fig. 4 shows a schematization of a control system with a laser brushing device;
- fig. 5 shows a schematization of a feed system of a container with specialized systems.

### DESCRIPTION OF SOME EXAMPLE EMBODIMENTS

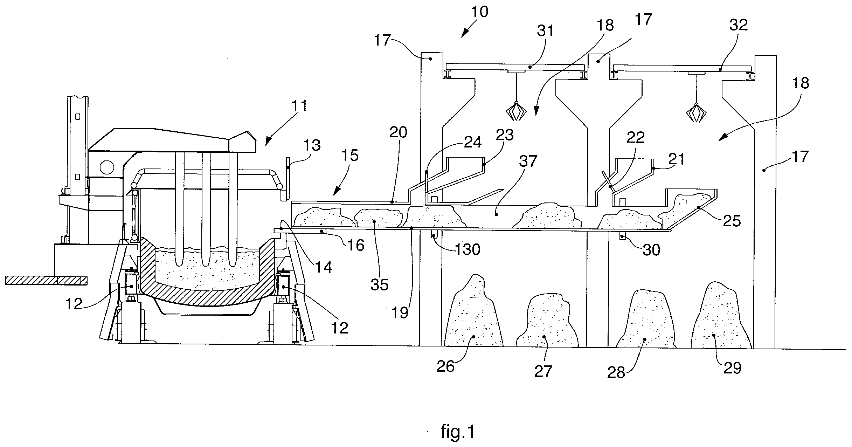

Fig. 1 shows schematically and synthetically an electric arc furnace 11 associated with a continuous conveyor 15 that is fed from cranes on gantries 31, 32 operating in two adjacent warehouses where there are differentiated piles of scrap 26, 27, 28 and 29, or metal charge materials, such as slabs of cast iron or suchlike. In their entirety the components form a continuous conveyor system for the metal charge 10 of a generally known type. In this case, for example, the electric arc furnace 11 has an eccentric casting hole and is moved by one or more jacks 12. The electric arc furnace 11 has a mouth 14 to introduce a metal charge, or scrap, 35, which can be at least partly and selectively closed by closing means 13.

The charge 35 arrives at the mouth 14, in the desired composition, thanks to the continuous conveyor 15, and is sent to the furnace thanks to a retractable extension 16 so as not to interfere with the closing means 13.

In the case shown here, the continuous conveyor 15 has a cover 20 that allows to pre-heat the scrap with the fumes of the furnace.

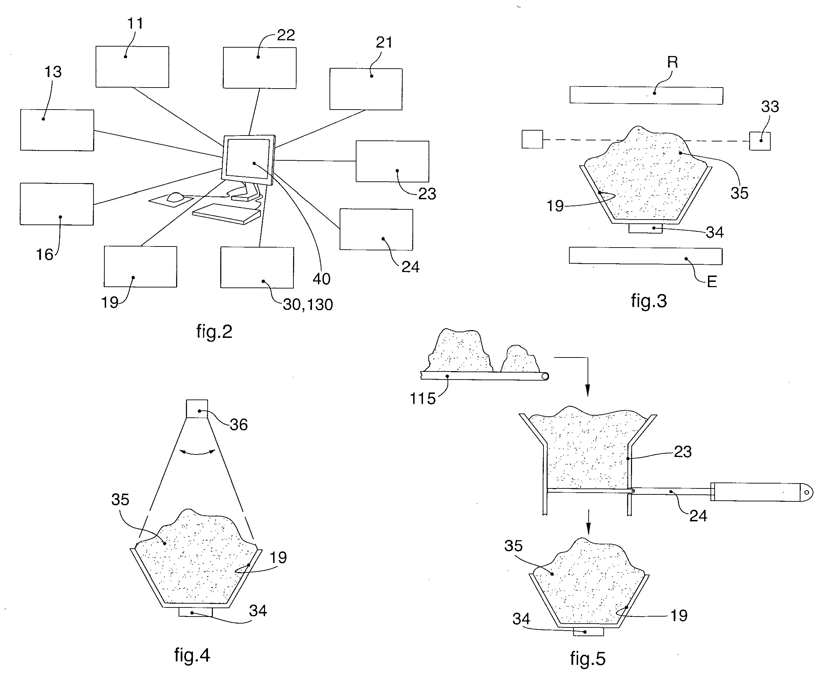

The conveyor 15 has a conveyor channel 19, in this case the vibrating type with vibration devices 34 associated with it (figs. 3-5).

The conveyor 15, in the case shown here, serves two adjacent warehouses 18, where there are an appropriate number of cranes and corresponding gantries 31 and 32.

The cranes slide on tracks present on columns 17, in a known manner, and are used to pick up the scrap according to the desired sequence from the piles 26, 27, 28 and 29.

The scrap is loaded either into a first hopper 25 which feeds it to the start of the conveyor 15, or directly onto the conveyor 15.

In the case shown in fig. 1, there are two X-ray detection systems, respectively 30 and 130, associated with the conveyor 15.

In cooperation with the conveyor 15 there are also containers 21 and 23 served by respective interception means 22 and 24 which are activated to load possible additional scrap into the conveyor 15.

The containers 21 and 23, or second hoppers, in the case of fig. 1 are fed by respective components.

Fig. 2 shows a processing and control system 40 that assists, receives signals and commands the various activities connected to the conveyor 15.

Fig. 3 shows an X-ray detection system 30, 130 in which E is the emitter and R is the receiver.

A system to control the maximum bulk 33 is also provided.

In some preferential forms of embodiment it may be provided that the emitter E is disposed under the conveyor 15 and concentrated in proximity to the central zone of the latter. The emitter E is configured to emit X rays that substantially affect the whole section through which the conveyor channel 19 passes. The receiver R is disposed above the conveyor 15 and is for example provided with a plurality of sensitive elements suitable to receive the signals emitted by the emitter E.

It is quite obvious that, in other forms of embodiment, the position of the emitter E and receiver R can be inverted, that is, the emitter E is positioned above the conveyor channel 19 and the receiver R disposed below.

Fig. 4 shows a system to detect the profile of the scrap 35 using a laser brush 36 generated by a generator.

Fig. 5 shows a container 23 associated with a closing system 24, of a known type (the drawing indicates only that a closing system is present), fed by a specialized belt 115 that brings small pieces of scrap and for example particulate material.

According to the invention, when the X-ray detection system 30,130, or the detection system with laser brush 36, detects a zone 37 on the conveyor 15 that is empty or insufficiently filled, it drives one or another of the containers 21 or 23, also depending on the type of material required, in order to replenish the missing quantity.

It is clear that modifications and/or additions of parts may be made to the device 10 as described heretofore, without departing from the scope of the present claims.

## Claims

1. Device to control the feed of the metal charge (35) in an electric arc furnace (11), comprising a conveyor (15) associated at the end to a introduction mouth (14) provided in said electric arc furnace (11), and at least a detection system (30, 130; 36) selected between an X-ray detection system (30, 130) and a brush of the laser type (36) to detect the point-by-point profile of the metal charge (35) present on said conveyor (15), the device also comprising two or more selective containing and loading means (31, 32; 115; 21, 23; 22, 24) for said metal charge (35), disposed distanced each other along said conveyor (15), and a processing and control system (40) connected to said detection system (30, 130; 36) of the point-by-point profile of the metal charge (35) in order to detect zones (37) of the conveyor (15) that are empty or insufficiently filled, wherein said selective containing and loading means (31, 32; 115; 21, 23; 22, 24) are configured to be selectively activated by said processing and control system (40) in order to replenish the metal charge (35) present on said conveyor (15) with an additional charge in correspondence of said zones empty or insufficiently filled.

2. Device as in claim 1, **characterized in that** said selective containing and loading means comprise two or more selected between cranes and gantries (31, 32), loading hoppers (21, 23) and selective interception means (22, 24) present in said loading hoppers (21, 23), wherein said loading hoppers (21, 23) are disposed along said conveyor (15) and are associated with it in order to load upon it a selected quantity of additional charge.

3. Device as in any claim hereinbefore, **characterized in that** said selective containing and loading means comprise at least a specialized belt (115) associated with a hopper (23) with corresponding closing system (24).

4. Device as in claim 1, **characterized in that** in association with the X-ray detection system (30, 130), a system is provided to control the maximum height (33) that the metal charge (35) can have on the conveyor (15).

5. Method to control the feed of the metal charge (35) in an electric arc furnace (11), in which a conveyor (15) is used, associated at the end to a feed mouth (14) provided in said electric arc furnace (11), the method comprising at least a step of detecting the point-by-point profile of the metal charge (35) present on said conveyor (15) using an X-ray detection system (30, 130) or a brush of the laser type (36) in order to detect zones (37) of the conveyor (15) that are empty or insufficiently filled, and at least a step of selectively loading an additional metal charge onto said conveyor (15), by selectively activating two or more selective containing and loading means (31, 32; 115; 21, 23; 22, 24) for said metal charge (35), disposed distanced each other along said conveyor (15), to carry out replenishment of the metal charge (35) in the conveyor (15) with an additional charge in correspondence of said zones (37) empty or insufficiently filled by selective containing and loading means (31, 32; 115; 21, 23; 22, 24).

6. Method as in claim 5, **characterized in that** said X-ray detection also detects the density of the metal charge.

7. Method as in any claim 5 or 6, **characterized in that** it also provides a step of detecting the maximum bulk of the charge on the conveyor (15).

8. Method as in any claim from 5 to 7, **characterized in that** said replenishment also provides a sub-step of selecting a specific and particular replenishment charge, in relation to the provided sequence of loading into the furnace.

9. Method as in any claim from 5 to 8, **characterized in that** two detection steps are provided, one coarse, in a position where the conveyor (15) is farther from the electric arc furnace (11), and one finer, in a position where the conveyor (15) is nearer to the electric arc furnace (11), each of the two detection steps determining its own selective step of replenishing the metal charge if insufficient.

## Patentansprüche

1. Vorrichtung zur Steuerung der Zufuhr der Metallladung (35) in einem Elektrolichtbogenofen (11), umfassend einen Förderer (15), der am Ende mit einer Einführungsöffnung (14), die in dem Elektrolichtbogenofen (11) bereitgestellt ist, verbunden ist, und mindestens ein Detektionssystem (30, 130; 36), ausgewählt zwischen einem Röntgenstrahl-Detektionssystem (30, 130) und einer Bürste vom Lasertyp (36), zur Detektion des Punkt-für-Punkt-Profils der Metallladung (35), die sich auf dem Förderer (15) befindet, wobei die Vorrichtung zudem zwei oder mehr selektive Aufnahme- und Lademittel (31, 32; 115; 21, 23; 22, 24) für die Metallladung (35), die entlang des Förderers (15) voneinander beabstandet angeordnet sind, und ein Verarbeitungs- und Steuersystem (40), das mit dem Detektionssystem (30; 130; 36) für das Punkt-für-Punkt-Profil der Metallladung (35) verbunden ist, um Bereiche (37) des Förderers (15) zu detektieren, die leer oder nicht ausreichend gefüllt sind, umfasst, wobei die selektiven Aufnahme- und Lademittel (31, 32; 115; 21, 23; 22, 24) dafür ausgelegt sind, durch das Verarbeitungs- und Steuersystem (40) selektiv aktiviert zu werden, um die Metallladung (35), die sich auf dem Förderer (15) befindet, durch eine zusätzliche Ladung in Übereinstimmung mit den leeren oder nicht ausreichend gefüllten Bereichen wiederaufzufüllen.

2. Vorrichtung nach Anspruch 1, **dadurch gekennzeichnet, dass** die selektiven Aufnahme- und Lademittel zwei oder mehrere umfassen, die zwischen Kränen und Gerüsten (31, 32), Ladetrichtern (21, 23) und selektiven Abfangmitteln (22, 24) ausgewählt sind, die in den Ladetrichtern (21, 23) vorhanden sind, wobei die Ladetrichter (21, 23) entlang des Förderers (15) angeordnet sind und damit verbunden sind, um eine ausgewählte Menge einer zusätzlichen Ladung auf diesen zu laden.

3. Vorrichtung nach einem der vorhergehenden Ansprüche, **dadurch gekennzeichnet, dass** die selektiven Aufnahme- und Lademittel mindestens ein Spezialband (115) umfassen, das mit einem Trichter (23) mit entsprechendem Schließsystem (24) verbunden ist.

4. Vorrichtung nach Anspruch 1, **dadurch gekennzeichnet, dass** in Verbindung mit dem Röntgenstrahlen-Detektionssystem (30, 130) ein System zur Steuerung der maximalen Höhe (33) bereitgestellt ist, die die Metallladung (35) auf dem Förderer (15) aufweisen kann.

5. Verfahren zur Steuerung der Zufuhr der Metallladung (35) in einem Elektrolichtbogenofen (11), in dem ein Förderer (15) verwendet wird, der am Ende mit einer Einführungsöffnung (14), die in dem Elektrolichtbogenofen (11) bereitgestellt ist, verbunden ist, das Verfahren umfassend mindestens einen Schritt des Detektierens des Punkt-für-Punkt-Profils der Metallladung (35), die sich auf dem Förderer (15) befindet, unter Verwendung von einem Röntgenstrahl-Detektionssystem (30, 130) oder einer Bürste vom Lasertyp (36), um Bereiche (37) des Förderers (15) zu detektieren, die leer oder nicht ausreichend gefüllt sind, und mindestens einen Schritt des selektiven Ladens einer zusätzlichen Metallladung auf den Förderer (15) durch selektives Aktivieren von zwei oder mehreren selektiven Aufnahme- und Lademitteln (31, 32; 115; 21, 23; 22, 24) für die Metallladung (35), die entlang des Förderers (15) voneinander beabstandet angeordnet sind, um eine Wiederauffüllung der Metallladung (35) in dem Förderer (15) mit einer zusätzlichen Ladung in Übereinstimmung mit den leeren oder nicht ausreichend gefüllten Bereichen (37) durch selektive Aufnahme- und Lademittel (31, 32; 115; 21, 23; 22, 24) durchzuführen.

6. Verfahren nach Anspruch 5, **dadurch gekennzeichnet, dass** die Röntgenstrahlendetektion auch die Dichte der Metallladung detektiert.

7. Verfahren nach Anspruch 5 oder 6, **dadurch gekennzeichnet, dass** es zudem einen Schritt des Detektierens der Maximalmenge der Ladung auf dem Förderer (15) vorsieht.

8. Verfahren nach einem der Ansprüche 5 bis 7, **dadurch gekennzeichnet, dass** die Wiederauffüllung zudem einen Unterschritt des Auswählens einer spezifischen und bestimmten Wiederauffüllungsladung, in Bezug auf die vorgesehene Reihenfolge zur Beladung des Ofens, vorsieht.

9. Verfahren nach einem der Ansprüche 5 bis 8, **dadurch gekennzeichnet, dass** zwei Detektionsschritte vorgesehen sind, einer davon grob, an einer Stelle, an der der Förderer (15) am weitesten entfernt von dem Elektrolichtbogenofen (11) ist, und einer feiner, an einer Stelle, an der der Förderer (15) näher an dem Elektrolichtbogenofen (11) ist, wobei in jedem der zwei Detektionsschritte ein eigener selektiver Schritt des Wiederauffüllens der Metallladung bestimmt wird, wenn dieser nicht ausreicht.

## Revendications

1. Dispositif pour commander l'alimentation de la charge métallique (35) dans un four à arc électrique (11), comprenant un convoyeur (15) associé à l'extrémité d'une embouchure d'introduction (14) prévue dans ledit four à arc électrique (11), et au moins un système de détection (30, 130 ; 36) sélectionné entre un système de détection à rayons X (30, 130) et une brosse du type laser (36) pour détecter le profil point par point de la charge métallique (35) présent sur ledit convoyeur (15), le dispositif comprenant également deux moyens de retenue et de chargement sélectifs (31, 32 ; 115 ; 21, 23 ; 22, 24) ou plus pour ladite charge métallique (35), disposés à distance l'un de l'autre le long dudit convoyeur (15), et un système de traitement et de commande (40) connecté audit système de détection (30, 130 ; 36) du profil point par point de la charge métallique (35) afin de détecter des zones (37) du convoyeur (15) vides ou insuffisamment remplies, dans lequel lesdits moyens de retenue et de chargement sélectifs (31, 32 ; 115 ; 21, 23 ; 22, 24) sont configurés pour être activés sélectivement par ledit système de traitement et de commande (40) afin de réapprovisionner la charge métallique (35) présente sur ledit convoyeur (15) avec une charge supplémentaire en correspondance desdites zones vides ou insuffisamment remplies.

2. Dispositif selon la revendication 1, **caractérisé en ce que** lesdits moyens de retenue et de chargement sélectifs comprennent deux ou plus sélectionnés entre des grues et des portiques (31, 32), des trémies de chargement (21, 23) et des moyens d'interception sélective (22, 24) présents dans lesdites trémies de chargement (21, 23), dans lequel lesdites trémies de chargement (21, 23) sont disposées le long dudit convoyeur (15) et lui sont associées afin de charger sur celui-ci une quantité choisie de charge supplémentaire.

3. Dispositif selon l'une quelconque des revendications précédentes, **caractérisé en ce que** lesdits moyens de retenue et de chargement sélectifs comprennent au moins une courroie spécialisée (115) associée à une trémie (23) avec un système de fermeture correspondant (24).

4. Dispositif selon la revendication 1, **caractérisé en ce qu'**en association avec le système de détection à rayons X (30, 130), un système est prévu pour commander la hauteur maximum (33) que la charge métallique (35) peut avoir sur le convoyeur. (15).

5. Méthode de commande de l'alimentation de la charge métallique (35) dans un four à arc électrique (11), dans lequel un convoyeur (15) est utilisé, associé à son extrémité à une embouchure d'alimentation (14) prévue dans ledit four à arc électrique (11), la méthode comprenant au moins une étape de détection du profil point par point de la charge métallique (35) présente sur ledit convoyeur (15) en utilisant un système de détection à rayons X (30, 130) ou une brosse de type laser (36) pour détecter des zones (37) du convoyeur (15) qui sont vides ou insuffisamment remplies, et au moins une étape de chargement sélectif d'une charge métallique supplémentaire sur ledit convoyeur (15), en activant sélectivement deux ou plus des moyens de retenue et de chargement sélectifs (31, 32 ; 115 ; 21, 23 ; 22, 24) pour ladite charge métallique (35), disposés à distance l'un de l'autre le long dudit convoyeur (15), pour effectuer le réapprovisionnement de la charge métallique 35) dans le convoyeur (15) avec une charge supplémentaire en correspondance desdites zones (37) vides ou insuffisamment remplies par les moyens de retenue et de chargement sélectifs (31, 32 ; 115 ; 21, 23 ; 22, 24).

6. Méthode selon la revendication 5, **caractérisée en ce que** ladite détection à rayons X détecte également la densité de la charge métallique.

7. Méthode selon l'une quelconque des revendications 5 ou 6, **caractérisée en ce qu'**elle prévoit également une étape de détection du volume maximum de la charge sur le convoyeur (15).

8. Méthode selon l'une quelconque des revendications 5 à 7, **caractérisée en ce que** ledit réapprovisionnement prévoit également une sous-étape de sélection d'une charge de réapprovisionnement spécifique et particulière, en fonction de la séquence de chargement fournie dans le four.

9. Méthode selon l'une quelconque des revendications 5 à 8, **caractérisée en ce que** deux étapes de détection sont prévues, une grossière, dans une position où le convoyeur (15) est plus éloigné du four à arc électrique (11), et une plus fin, dans une position où le convoyeur (15) est plus proche du four à arc électrique (11), chacune des deux étapes de détection déterminant sa propre étape sélective de réapprovisionnement de la charge métallique si elle est insuffisante.
